# FASCICULE DE BREVET EUROPEEN

(11) **EP 2 963 309 B1**
(45) Date de publication et mention de la délivrance du brevet: **02.05.2018**
(21) Numéro de dépôt: 15171483.9
(22) Date de dépôt: 10.06.2015
(51) Int. Cl.: F16C 33/60, F16C 33/64, F16C 19/36, F16C 43/06, F16C 35/073

(54) **ROULEMENT COMPORTANT UNE BAGUE INTÉRIEURE EN PLUSIEURS PARTIES, PROCÉDÉ DE MONTAGE D'UN TEL ROULEMENT ET ENSEMBLE COMPOSÉ D'UN TEL ROULEMENT**
WÄLZLAGER, DAS EINEN AUS VERSCHIEDENEN TEILEN BESTEHENDEN INNENRING UMFASST, MONTAGEVERFAHREN EINES SOLCHEN WÄLZLAGERS UND EINHEIT, DIE AUS EINEM SOLCHEN WÄLZLAGER BESTEHT
BEARING COMPRISING AN INNER RING IN A PLURALITY OF PORTIONS, METHOD FOR MOUNTING SUCH A BEARING AND ASSEMBLY COMPRISING SUCH A BEARING.

(30) Priorité: 11.06.2014 FR 1455288
(43) Date de publication de la demande: 06.01.2016
(73) Titulaire: NTN-SNR Roulements, 74010 Annecy (FR)
(72) Inventeur: Pallanchard, Vincent, 74150 RUMILLY (FR); Cordier, Thomas, 74330 POISY (FR)
(74) Mandataire: Derambure Conseil

(56) Documents cités:
- WO-A1-2014/045934
- DE-B- 1 075 446
- FR-A1- 2 519 104
- FR-A5- 2 095 778
- GB-A- 615 545

## Description

L'invention concerne, de façon générale, le domaine technique des unités de roulement et, en particulier, celui des unités de roulement comportant des bagues en plusieurs parties.

FR 2 519 104 décrit une unité de roulement, mais ne décrit pas que celle-ci comporte des bagues en plusieurs parties. Ce document ne fait donc pas partie du domaine technique de la présente invention.

Plus précisément, l'invention concerne le domaine du montage des corps roulants, notamment celui des roulements à corps roulants adjacents et juxtaposés les uns par rapport aux autres, encore appelés roulements à corps roulants jointifs. Par exemple, les roulements peuvent être de type roulement à bille à quatre points de contact ou roulement à rouleaux croisés.

De nombreuses publications traitent du problème relatif au remplissage des corps roulants d'unités de roulement, encore appelées ci-après roulements, comprenant notamment des corps roulants jointifs (c'est à dire adjacents et en contact les uns par rapport aux autres).

La publication FR2699977A1, par exemple se rapporte à un roulement comportant une bague intérieure et une bague extérieure coaxiale l'une par rapport à l'autre. L'une des bagues comporte une ou plusieurs découpe(s) de façon à rendre accessible un espace annulaire entre les deux bagues pour le remplissage de corps roulants. Un bouchon est prévu pour refermer la découpe après le remplissage.

La publication DE102008011060A1 se rapporte également à un roulement comportant une bague intérieure et une bague extérieure. La bague intérieure comprend une découpe. Cette découpe permet le remplissage de corps roulants dans un espace annulaire situé entre les bagues intérieure et extérieure. Un organe de recouvrement (encore appelé bouchon) est adapté pour venir en recouvrement de ladite découpe.

Dans la publication FR2657663, une encoche est pratiquée dans l'une des bagues, pour former un chemin d'introduction des corps roulants.

Les publications GB197861 et FR2749624 prévoient une découpe située sur une tranche de la bague extérieure du roulement et débouchant radialement dans l'espace annulaire accessible entre la bague intérieure et la bague extérieure.
GB615545 décrit un roulement suivant le préambule de la revendication 1. FR2095778 décrit un procédé de fabrication d'un palier comportant des phases d'usinage, trempe et rectification et dont la bague intérieure est faite en deux parties reliées ensemble par une douille.

De telles réalisations permettent le remplissage d'une rangée de corps roulants dans un roulement comprenant une bague intérieure et une bague extérieure. Toutefois ces réalisations ne donnent pas satisfaction. En effet, on observe des problèmes en application dus à l'utilisation des découpes et bouchons. Notamment, des à-coups à la rotation peuvent apparaître. En outre, l'usinage de tels découpes et bouchons doit être particulièrement précis.

Il existe par conséquent le besoin de simplifier le remplissage des corps roulants de roulements tout en garantissant un roulement non « grattant » (c'est-à-dire ne présentant pas d'à-coups à la rotation) avec des tolérances de fabrication précises, qui soit facile à réaliser sans augmentation démesurée des coûts de fabrication.

On connait de FR 2 095 778 un roulement qui comporte :
- une bague extérieure définissant un premier chemin de roulement continu,
- une bague intérieure, lesdites bagues intérieure et extérieure comportant chacune un axe central, les axes centraux des bagues intérieures et extérieures étant parallèles entre eux, lesdites bagues intérieure et extérieure étant espacées radialement par un espace annulaire,
- une rangée de corps roulants agencée dans l'espace annulaire et couplant en rotation ladite bague intérieure et ladite bague extérieure, et est caractérisé en ce que la bague intérieure comprend une première partie de bague et une deuxième partie de bague, mobiles l'une par rapport à l'autre entre :
- une configuration assemblée, dans laquelle les première et deuxième parties de bague forment ensemble un deuxième chemin de roulement continu, et
- une configuration ouverte, dans laquelle la première partie de bague et la deuxième partie de bague sont à distance l'une de l'autre, des corps roulants de la rangée de corps roulants pouvant alors être introduits et/ou ôtés de l'espace annulaire,
une partie du deuxième chemin de roulement étant prévue sur chacune des première et deuxième parties de bague, lesdits premier et deuxième chemins de roulement coopérant avec chacun des corps roulants de la rangée de corps roulants, et chacune des première et deuxième parties de bague de la bague intérieure s'étendent sur un secteur angulaire égal à 360° autour de l'axe central de la bague intérieure.

Dans ce document, une douille à paroi mince est utilisée pour maintenir ensemble les première et deuxième parties de bague. Toutefois, cette réalisation ne permet pas un montage pratique du roulement.

Selon l'invention, on prévoit un roulement dans lequel, outre les aspects mentionnés plus haut, la bague intérieure comporte en outre une troisième partie de bague, adaptée pour être solidarisée à un organe de sorte à former une pièce d'interface entre l'organe et l'ensemble constitué des première partie de bague, deuxième partie de bague, la troisième partie de bague étant mobile par rapport à la deuxième partie de bague entre :
- une configuration assemblée, dans laquelle la troisième partie de bague est fixée sur la deuxième partie de bague, et
- une configuration ouverte, dans laquelle la troisième partie de bague est à distance de la deuxième partie de bague, les première, deuxième et troisième parties de bague étant maintenues solidaires les unes par rapport aux autres par des organes de fixations coopérant avec des orifices de fixation prévus dans les première, deuxième et troisième parties de bague.
Grâce à cette réalisation, il est possible de réaliser un roulement facilement équilibré, la bague intérieure comportant deux parties s'étendant sur un secteur angulaire égal à 360° autour de l'axe central de la bague intérieure. En outre, le remplissage du roulement est réalisé facilement. La troisième partie de bague peut être dédiée à la fonction d'interfaçage mécanique avec des organes extérieurs au roulement.

Selon une réalisation complémentaire, la première et deuxième partie de bague sont réalisées dans un premier matériau, la troisième partie de bague est réalisée dans un deuxième matériau, le deuxième matériau étant différent du premier matériau.

Selon une réalisation, la troisième partie de bague comporte un premier traitement thermique et/ou de surface, les première et deuxième parties de bague comportent un deuxième traitement thermique et/ou de surface, les premier et deuxième traitements thermiques et/ou de surface étant différents.

Selon une réalisation, la deuxième partie de bague et la troisième partie de bague sont positionnées l'une par rapport à l'autre par complémentarité de forme.

Selon une réalisation, la deuxième partie de bague comporte un premier épaulement et la troisième partie de bague comporte un deuxième épaulement complémentaire du premier épaulement pour le positionnement par complémentarité de forme de la troisième partie de bague par rapport aux première et deuxième parties de bague, et plus particulièrement par rapport à la deuxième partie de bague.

Selon une réalisation, les organes de fixations sont des vis. Par exemple, les première et deuxième parties de bague et/ou la troisième et la deuxième partie de bague sont maintenues solidaires l'une de l'autre par des vis.

Selon une réalisation, la partie du deuxième chemin de roulement prévue sur la première partie de bague est symétrique à la partie du deuxième chemin de roulement prévue sur la deuxième partie de bague selon un plan de symétrie ayant pour normale l'axe central de la bague intérieure.

Selon une réalisation, la bague extérieure comporte des orifices de fixation. Notamment, la bague extérieure comporte des trous taraudés débouchant. Par exemple, la bague extérieure comporte un corps principal de bague extérieure, le corps principal étant muni du premier chemin de roulement, et une collerette annulaire « rentrante » s'étendant vers l'axe central de bague intérieure. Les trous taraudés débouchant peuvent être localisés soit sur la collerette soit sur le corps principal, à distance du premier chemin de roulement.

Selon une réalisation, la rangée de corps roulants est une rangée de rouleaux coopérant chacun avec les premier et deuxième chemins de roulement ménagés sur les bagues intérieure et extérieure.

Selon une réalisation, les corps roulants sont en contact les uns par rapport aux autres. En d'autres termes, les corps roulants sont jointifs. (On n'utilise pas de cage).

Selon une réalisation, la première partie de bague a une face extérieure biseautée qui définit une première partie du deuxième chemin de roulement, une face axiale intérieure orientée vers l'axe central de la bague intérieure, une face radiale intérieure et une face radiale extérieure.

Selon une réalisation complémentaire, la bague extérieure comporte un corps principal et une collerette annulaire s'étendant vers l'axe central de la bague extérieure et recouvrant au moins en partie la face radiale extérieure de la première partie de bague.

Selon une réalisation complémentaire, la collerette comporte des orifices traversant de sorte à permettre l'accès par un outil à la première partie de bague.

La présente invention concerne également un procédé de fabrication d'un roulement, notamment d'un roulement tel que précédemment décrit, comprenant les étapes suivantes :
- réaliser une bague extérieure définissant un premier chemin de roulement continu,
- ébaucher une bague intérieure comprenant une première partie de bague et une deuxième partie de bague, lesdites bagues intérieure et extérieure comportant chacune un axe central et chacune des première et deuxième parties de bague de la bague intérieure s'étendant sur un secteur angulaire égal à 360° autour de l'axe central de la bague intérieure,
- assembler la première partie de bague et la deuxième partie de bague,
- maintenir en position la deuxième partie de bague sur la première partie de bague,
- usiner un deuxième chemin de roulement continu sur la première partie de bague et la deuxième partie de bague de la bague intérieure, une partie du deuxième chemin de roulement étant prévue sur chacune des première et deuxième parties de bague,
- traiter thermiquement le deuxième chemin de roulement,
- rectifier le deuxième chemin de roulement,
- placer la première partie de bague et la deuxième partie de bague en configuration ouverte, dans laquelle la première partie de bague et la deuxième partie de bague sont à distance l'une de l'autre, en désassemblant la deuxième partie de bague de la première partie de bague pour laisser accessible une partie du deuxième chemin de roulement,
- assembler la bague extérieure et l'une des première ou deuxième partie de bague, les axes centraux des bagues intérieure et extérieure étant disposés parallèles entre eux, lesdites bagues intérieure et extérieure étant espacées radialement par un espace annulaire,
- remplir l'espace annulaire formé entre la bague extérieure et l'une des première ou deuxième partie de bague avec une rangée de corps roulants, lesdits premier et deuxième chemins de roulement coopérant avec chacun des corps roulants de la rangée de corps roulants,
- replacer l'autre de la deuxième ou première partie de bague et fixer les deux parties de bague l'une par rapport à l'autre,
le procédé comprenant en outre une étape d'ébauche d'une troisième partie de bague, adaptée pour être solidarisée à un organe de sorte à former une pièce d'interface entre l'organe et l'ensemble constitué des première partie de bague et deuxième partie de bague, une étape de fixation de la troisième partie de bague sur la deuxième partie de bague, les première, deuxième et troisième parties de bague formant la bague intérieure, et le maintien des première et deuxième et troisième parties de bague solidaires les unes par rapport aux autres par des organes de fixations.

Selon une réalisation, la deuxième partie de bague est réalisée avec un premier épaulement et la troisième partie de bague est réalisée avec un deuxième épaulement complémentaire du premier épaulement, et le procédé de montage comporte en outre une étape de positionnement par complémentarité de forme de la troisième partie de bague par rapport aux première et deuxième parties de bague.

La présente invention concerne enfin un ensemble de roulement comprenant un roulement tel que décrit, et un organe, ladite troisième partie de bague étant fixée à l'organe et lesdites première et deuxième parties de bagues étant à distance de l'organe.

Selon une réalisation, la bague extérieure comporte des trous taraudés débouchant, l'ensemble de roulement comprenant en outre un deuxième organe, le deuxième organe étant assemblé sur la bague extérieure du roulement par l'intermédiaire des trous taraudés débouchant, le roulement couplant ainsi en rotation le premier et le deuxième organe.

D'autres caractéristiques et avantages de l'invention ressortiront clairement de la description qui en est faite ci-après, à titre indicatif et nullement limitatif, en référence aux dessins annexés, dans lesquels :
- La figure 1 est une vue en perspective d'un roulement selon l'invention comportant une bague extérieure, une bague intérieure et un espace annulaire situé entre les deux bagues dans lequel est logé une rangée de corps roulants.
- La figure 2 est une vue en coupe axiale du roulement de la figure 1, avec différentes parties formant la bague intérieure, ainsi que les organes de fixations des différentes parties de la bague intérieure.
- La figure 3 est une vue en perspective de la bague intérieure du roulement représenté sur les figures 1 et 2.
- Les figures 4a, 4b et 4c sont des vues en perspective des première, deuxième et troisième parties de bague de la bague intérieure de la figure 3.
- La figure 5 est une vue en perspective de la bague extérieure du roulement représenté figure 1.
- La figure 6 représente un ensemble de roulement comprenant le roulement de la revendication 1, un premier organe et un deuxième organe.
- La figure 7 est une vue en perspective en coupe d'un roulement selon un deuxième mode de réalisation de l'invention comportant une première bague, une bague intermédiaire comprenant une première et une deuxième partie de bague, la première et la deuxième partie de bague formant chacune une demi-bague. Le roulement comporte en outre une troisième bague, et deux espaces annulaires dans chacun desquels est logée une rangée de corps roulants. La première et la deuxième partie de bague sont dans une configuration assemblée.

Un roulement 10 selon l'invention est destiné à faire partie d'un assemblage ayant un axe A-A et comprenant non seulement le roulement 10 mais également une pièce fonctionnelle associée. A titre d'exemple non limitatif, le roulement 10 peut être monté sur un arbre d'entraînement.

Le terme « axial » se réfère conventionnellement à ce qui est sensiblement orienté dans la direction de l'axe A-A tandis que le terme « radial » se réfère conventionnellement à ce qui est sensiblement perpendiculaire à cet axe A-A.

Par ailleurs, les termes « interne » et « externe » ont des sens relatifs se rapportant à leur positionnement radial vis-à-vis de l'axe A-A ; la position « interne » désignant conventionnellement une position radiale plus proche de l'axe A-A que la position « externe ».

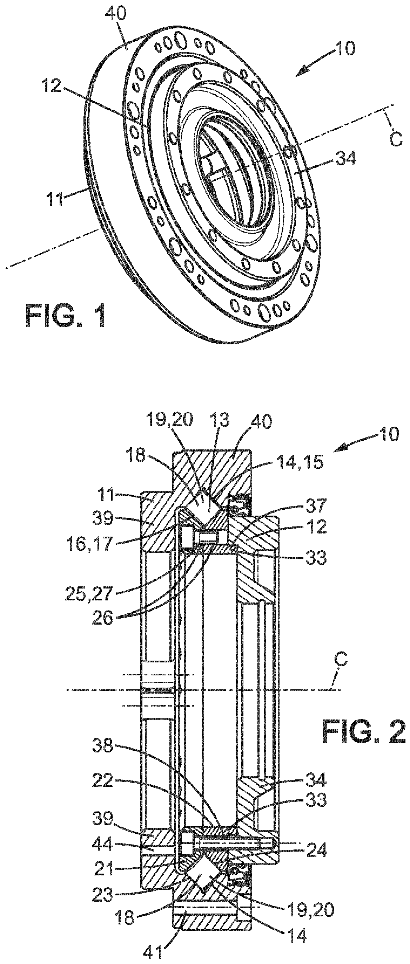

Les figures 1 et 2 illustrent un roulement 10 selon l'invention. Le roulement 10 comporte une première bague 11, appelée par la suite bague extérieure 11, une deuxième bague 12, appelée par la suite bague intérieure 12, et une rangée de corps roulants.

Les bague extérieure 11 et bague intérieure 12 sont des solides de révolution. Chaque bague extérieure et intérieure 11, 12 est sensiblement symétrique autour d'un axe C-C qui défini son axe central. En l'espèce, chacune des bagues intérieure et extérieure forme une couronne ou a une forme annulaire. Les axes centraux C-C des bagues extérieure 11 et intérieure 12 sont parallèles. En l'espèce, les axes centraux C-C des bague extérieure 11 et bague intérieure 12 sont confondus. Les axes centraux C-C sont généralement confondus avec l'axe A-A défini ci-dessus. Les bagues intérieures et extérieures 11, 12 peuvent en outre être concentriques ou non concentriques.

Chacune des bagues comporte un diamètre intérieur et un diamètre extérieur. Le diamètre intérieur correspond à la longueur d'un segment de droite passant par l'axe central C-C de la bague et limité par la surface dite « interne » de la bague (ou encore, la surface orientée vers l'axe central). Le diamètre intérieur correspond à la longueur d'un segment de droite passant par l'axe central C-C de la bague et limité par la surface dite « externe » de la bague.

Les dimensions des bagues intérieure et extérieure 12, 11 sont telles que la bague intérieure 12 peut s'inscrire dans la bague extérieure 11.

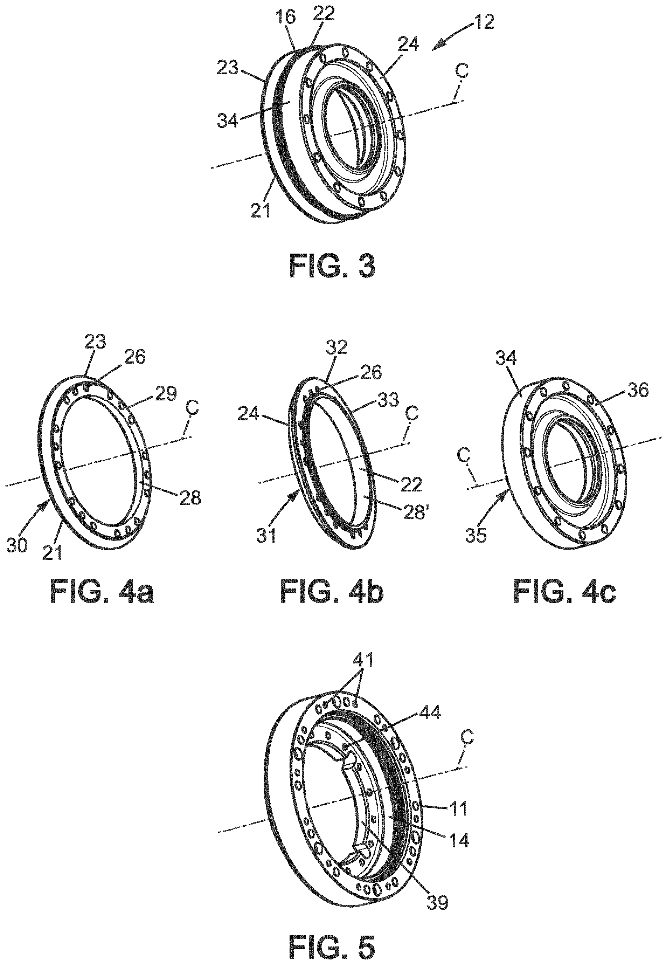

La bague extérieure 11 est par exemple une bague continue, tel que représenté sur la figure 5 notamment. La bague extérieure 11 définit un premier chemin de roulement 15. En l'occurrence, la bague extérieure 11 comporte, sur une face intérieure 14 orientée vers son axe central, une rainure, notamment en forme de V vue de sa section transversale. Cette rainure forme le premier chemin de roulement 15. Le premier chemin de roulement 15 est continu.

La bague intérieure 12 définit un deuxième chemin de roulement 16. En l'espèce, la bague intérieure 12 comporte, sur une surface extérieure 17, orientée opposée à son axe central une rainure. Cette rainure peut être en forme de V, comme visible sur la figure 2. La rainure forme le deuxième chemin de roulement 16.

Dans une position assemblée du roulement 10, la bague intérieure 12 est localisée à l'intérieur de la bague extérieure 11 et le premier chemin de roulement 15 est en regard du deuxième chemin de roulement 16. Les premier et deuxième chemins de roulement 15, 16 forment des frontières d'un espace annulaire 18. En d'autres termes, les bagues intérieure et extérieure 12, 11 sont espacées radialement par l'espace annulaire 18.

Une rangée de corps roulants 19 est agencée dans l'espace annulaire 18. Les corps roulants 20 de la rangée de corps roulants 19 peuvent être tout type de corps roulants communément utilisés dans les roulements. Par exemple, les corps roulants 20 sont des billes ou des rouleaux. En l'espèce, tel que représenté sur la figure 2, les corps roulants 20 de la rangée de corps roulants 19 sont des rouleaux. Les rouleaux peuvent être de forme cylindrique et s'étendre longitudinalement selon un axe de cylindre. Chaque rouleau a, par exemple, une longueur de l'ordre de son diamètre, notamment très légèrement inférieure à son diamètre.

Les rouleaux de la rangée de corps roulants 19 sont agencés alternativement selon deux directions différentes. En d'autres termes, chaque rouleau est orienté avec un angle non nul par rapport aux rouleaux qui lui sont directement adjacents. Ainsi, un rouleau de la rangée de corps roulants est agencé selon une première direction, et les rouleaux qui lui sont directement adjacents sont agencés selon une deuxième direction, les première et deuxième directions formant un angle non nul entre elles. De préférence, les première et deuxième directions sont orthogonales de sorte que les rouleaux soient orientés à angle droit les uns par rapport aux autres. Un nombre pair de rouleaux peut être prévu afin de respecter l'alternance entre rouleaux.

Les rouleaux de la rangée de corps roulants 19 sont adjacents les uns aux autres. Aucun séparateur n'est prévu entre les rouleaux, et lesdits rouleaux sont en contact les uns par rapport aux autres. Aucun séparateur n'étant prévu entre les corps roulants de la rangée de corps roulants, les corps roulants sont jointifs (en d'autres termes adjacents et en contact les uns par rapport aux autres).

La rangée de corps roulants 19 assure le couplage en rotation des bagues intérieure et extérieure 12, 11 l'une par rapport à l'autre.

Tel que visible sur la figure 2 notamment, la bague intérieure 12 du roulement 10 comporte une première partie de bague 21 et une deuxième partie de bague 22. Les première partie de bague 21 et deuxième partie de bague 22 sont sensiblement symétriques l'une par rapport à l'autre dans un plan ayant pour normale l'axe central de la bague intérieur. Les première et deuxième parties de bague 21, 22 de la bague intérieure s'étendent sur un secteur angulaire égal à 360° autour de l'axe central C-C de la bague intérieure 12. Autrement dit, les première et deuxième parties de bague 21, 22 ont une forme annulaire.

En l'occurrence, la première partie de bague et la deuxième partie de bague 21, 22 sont mobiles l'une par rapport à l'autre pour l'assemblage du roulement. Elles peuvent toutes les deux être déplacées entre une configuration assemblée, dans laquelle les première et deuxième parties de bague 21, 22 forment ensemble le deuxième chemin de roulement 16 continu, et une configuration ouverte, dans laquelle la première partie de bague 21 et la deuxième partie de bague 22 sont à distance l'une de l'autre.

Chacune des première et deuxième parties de bague 21, 22 comporte une partie du deuxième chemin de roulement 16. Plus particulièrement, la première partie de bague 21 comporte une première partie du deuxième chemin de roulement 23 qui est symétrique à une deuxième partie du deuxième chemin de roulement 24 prévu sur la deuxième partie de bague 22. En d'autres termes, la réunion des première et deuxième partie de bague 21, 22 permet de former le deuxième chemin de roulement 16. Tel que représenté sur la figure 2 notamment, le deuxième chemin de roulement 16 est matérialisé sous la forme d'une rainure en V, et chaque branche du V est située sur une partie de bague différente.

Les première partie du deuxième chemin de roulement 23 et deuxième partie du deuxième chemin de roulement 24 sont symétriques l'une par rapport à l'autre dans un plan ayant pour normale l'axe central de la bague intérieure. Cette symétrie assure un deuxième chemin de roulement qui permet un fonctionnement « non grattant » du roulement. Plus particulièrement, la jonction de la première partie du deuxième chemin de roulement 23 et de la deuxième partie du deuxième chemin de roulement 24 est réalisée au niveau de la « pointe » de la rainure en forme de V. La jonction des de première partie du deuxième chemin de roulement 23 et deuxième partie du deuxième chemin de roulement 24 est ainsi réalisée à un endroit particulier permettant d'éviter les problèmes d'à-coups dus au chemin de roulement lors du fonctionnement du roulement 10.

Le positionnement de la première partie de bague 21 par rapport à la deuxième partie de bague 22 est assuré par la présence du deuxième chemin de roulement 16.

Des organes de fixation 25 permettent la fixation de la première partie de bague 21 sur la deuxième partie de bague 22. Par exemple, un orifice 26, qui peut être taraudé, est prévu sur la première et la deuxième partie de bague 21, 22 et une vis 27 assure la fixation de l'une à l'autre. Par exemple, plusieurs, notamment six, vis de fixation peuvent être prévues pour coopérer avec plusieurs, respectivement six, orifices de fixation répartis de façon régulière autour de l'axe central C-C sur les première et deuxième parties de bague 21, 22.

Les orifices de fixation sont localisés à distance du deuxième chemin de roulement 16 pour ne pas perturber la cinématique des corps roulants. Par exemple les orifices de fixation sont plus proches de l'axe central C-C que le deuxième chemin de roulement 16. Dans des variantes de réalisation, d'autres moyens de fixation peuvent être utilisés.

Comme mentionné ci-avant, les première et deuxième parties de bague 21, 22 de la bague intérieure 12 s'étendent sur un secteur angulaire égal à 360° autour de l'axe central C-C de la bague intérieure 12. La figure 4a illustre en perspective la première partie de bague 21. Plus particulièrement, la première partie de bague 21 a une forme générale extérieure tronconique. La première partie de bague 21 a une face extérieure biseautée qui définit la première partie du deuxième chemin de roulement 23, une face axiale intérieure 28 orientée vers l'axe central C-C de la bague intérieure 12, une face radiale intérieure 29 et une face radiale extérieure 30. La face radiale extérieure 30 est opposée à la face radiale intérieure 29.

De façon similaire, la figure 4b illustre en perspective la deuxième partie de bague 22. La deuxième partie de bague 22 a une forme générale extérieure tronconique. La deuxième partie de bague 22 comporte également une face extérieure biseautée qui définit la deuxième partie du deuxième chemin de roulement 24, une face axiale intérieure 28' orientée vers l'axe central C-C de la bague intérieure, une face radiale intérieure 31 et une face radiale extérieure 32. La face radiale extérieure 32 est opposée à la face radiale intérieure 31.

Les faces radiales intérieures 29, 31 des première et deuxième parties de bagues 21, 22 sont adjacentes en configuration assemblée des première et deuxième parties de bague 21, 22. Les dimensions des première et deuxième parties de bague 21, 22 sont semblables. Cela permet notamment de simplifier le procédé de fabrication.

La deuxième partie de bague 22 est sensiblement symétrique à la première partie de bague 21, toutefois la deuxième partie de bague peut comporter en outre une collerette 33 située sur la face radiale extérieure 32 de la deuxième partie de bague 22. La collerette 33 s'étend axialement. Cette collerette 33 forme avec la face radiale extérieure 32 un épaulement avec lequel est destiné à coopérer une troisième partie de bague 34.

La bague intérieure 12 du roulement 10 comprend ainsi une troisième partie de bague 34. La troisième partie de bague 34 est mobile par rapport à la deuxième partie de bague 22 entre une configuration assemblée, dans laquelle la troisième partie de bague 34 est fixée sur la deuxième partie de bague 22, et une configuration ouverte, dans laquelle la troisième partie de bague 34 est à distance de la deuxième partie de bague 22.

La troisième partie de bague 34 n'est pas destinée à venir en contact avec la rangée de corps roulants. Aussi, à la différence des première et deuxième partie de bague 21, 22, qui comportent des surfaces fonctionnelles de « roulement », la troisième partie de bague 34 n'a pas de fonction de couplage en rotation.

La troisième partie de bague 34 est visible notamment sur la figure 4c. Elle a une forme annulaire avec un diamètre intérieur et un diamètre extérieur. Le diamètre extérieur de la troisième partie de bague 34 correspond sensiblement au diamètre extérieur de la première partie de bague 21 et/ou de la deuxième partie de bague 22. Le diamètre extérieur de la troisième partie de bague 34 peut être légèrement inférieur au diamètre extérieur de la première partie de bague 21 et/ou de la deuxième partie de bague 22. Le diamètre intérieur de la troisième partie de bague 34 est, comme illustré sur la figure 1 ou la figure 2 inférieur au diamètre intérieur de la première partie de bague 21 et/ou de la deuxième partie de bague 22.

La troisième partie de bague 34 comporte une face radiale intérieure 35 et une face radiale extérieure 36 opposée à la face radiale intérieure 35. La face radiale intérieure 35 est destinée à venir en regard de et à être adjacente à la face radiale extérieure 32 de la deuxième partie de bague 22. Un épaulement 37 (cf. figure 2) peut être prévu sur la face radiale intérieure de la troisième partie de bague 34. L'épaulement 37 est complémentaire de l'épaulement formé par la collerette 33 de la deuxième partie de bague 22. Ces deux épaulements permettent de réaliser un positionnement précis des deuxième et troisième parties de bague 22, 34.

Toutefois, dans des variantes de réalisation de l'invention, le positionnement de la troisième partie de bague 34 par rapport à la deuxième partie de bague 22 peut être fait par tout assemblage par complémentarité de forme. Une goupille peut également être prévue pour réaliser le positionnement des deux parties de bague.

Les première, deuxième et troisième parties de bague 21, 22, 34 étant des pièces séparées, elles peuvent être réalisées dans des matériaux différents. Notamment, les première et deuxième partie de bague 21, 22 peuvent être réalisées dans un premier matériau, la troisième partie de bague 34 peut être réalisée dans un deuxième matériau, le deuxième matériau étant différent du premier matériau. Par exemple, les première et deuxième parties de bague 21, 22 peuvent être réalisée dans un premier matériau adapté pour réaliser la fonction de roulement et la troisième partie de bague 34 peut être réalisée dans un deuxième matériau adapté pour réaliser une fonction de fixation, de transmission ou de positionnement. Les première et deuxième parties de bague, et la troisième partie de bague 34 peut être en aluminium, polyamide, métallique, plastique, matériau synthétiques. Elles peuvent être éventuellement en un matériau rigide ou encore en un matériau flexible.

Les traitements thermiques et/ou de surface utilisés pour les première, deuxième et troisième partie de bague 21, 22, 34 peuvent également être différents. Par exemple, les première et deuxième parties de bague 21, 22 comportent un premier traitement thermique et/ou de surface, la troisième partie de bague 34 comporte un deuxième traitement thermique et/ou de surface, les premier et deuxième traitements thermiques et/ou de surface étant différents.

La troisième partie de bague 34 est fixée sur la première partie de bague 21 par l'intermédiaire d'un organe de fixation 38. Par exemple une vis de fixation 38 peut permettre la fixation de la troisième partie de bague 34 sur la deuxième partie de bague 22. Il est par exemple possible de répartir de façon régulière par rapport à l'axe central C-C une pluralité d'orifices de fixation sur la troisième partie de bague 34 et sur la deuxième partie de bague 22. La première partie de bague 21 peut également être prévue avec une pluralité d'orifices de fixation.

Ces orifices de fixation correspondent les uns par rapport aux autres, de sorte à pouvoir y insérer des organes de fixation 25, 38. Des organes de fixation sont prévus pour l'assemblage de la première, deuxième et troisième partie de bague 34. Aussi, un même organe de fixation 38 peut être prévu traversant la première, la deuxième et la troisième partie de bague 21, 22, 34.

Tel que représenté sur la figure 2, des premiers organes de fixation 25 sont prévus pour la fixation des première et deuxième parties de bague 21, 22 entre elles et des deuxièmes organes de fixation 38 sont prévus pour la fixation des première, deuxième et troisième parties de bague 21, 22, 34 entre elles. Par exemple, douze vis de fixation peuvent être prévues pour coopérer avec douze orifices de fixation prévus sur les première, deuxième et troisième parties de bague 21, 22, 34.

Les orifices de fixation sont prévus à distance du deuxième chemin de roulement 16. Par exemple, les orifices de fixation des première, deuxième et troisième parties de bague 21, 22, 34 sont plus proche de l'axe central C-C que le deuxième chemin de roulement 16. Les orifices de fixation des première, deuxième et troisième parties de bague 21, 22, 34 peuvent être en quinconce ou régulièrement disposés entre les orifices de fixation des première et deuxième parties de bague 21, 22.

Le montage d'un roulement 10 tel que décrit peut être réalisé de la façon qui suit.

Lors d'une première étape, on réalise la bague extérieure 11 définissant le premier chemin de roulement 15 continu. On usine ou ébauche une première et une deuxième pièce destinées à devenir respectivement la première et la deuxième partie de bague 21, 22 de la bague intérieure 12.

On assemble ensuite la première et deuxième partie de bague 21, 22 et on maintient ces deux éléments afin d'usiner le deuxième chemin de roulement 16 continu sur la première partie de bague 21 et la deuxième partie de bague 22 de la bague intérieure 12, une partie du deuxième chemin de roulement 23, 24 étant prévue sur chacune des première et deuxième parties de bague 21, 22. On génère ainsi le deuxième chemin de roulement 16 (ou surface de roulement) composé des première et deuxième parties du deuxième chemin de roulement 23, 24.

On vient ensuite placer en configuration ouverte les première et deuxième parties de bague 21, 22.

La première (ou la deuxième) partie de bague 21 (22) est assemblée avec la bague extérieure 11. En configuration ouverte de la première et la deuxième partie de bague 21, 22, l'espace annulaire 18 est « ouvert » et accessible et les corps roulants 20 de la rangée de corps roulants 19 peuvent être rempli dans l'espace annulaire 18.

On agence les corps roulants 20 dans l'espace annulaire 18 « ouvert ». En d'autres termes, on vient ensuite remplir les corps roulants 20 dans l'espace annulaire 18 entre la première (ou la deuxième) partie de bague 21 (22) et la bague extérieure 11. Les corps roulants 20 sont par exemple de type billes à quatre points de contact ou roulement à rouleaux croisés.

On vient ensuite replacer la deuxième partie de bague 22 sur la première partie de bague 21 en repositionnant la deuxième (ou première) partie de bague 22 (21) pour reformer précisément le deuxième chemin de roulement 16. Les première et deuxième parties de bague 21, 22 sont alors en configuration assemblée.

Puis, une étape de fixation de la deuxième (ou première) partie de bague 22 (21) est prévue, par un organe de fixation 25, et par exemple par une ou des vis de fixation.

Le procédé peut également comporter une étape d'usinage ou d'ébauche d'une troisième pièce destinée à devenir la troisième partie de bague 34.

Une étape de positionnement de la troisième partie de bague par rapport à la deuxième partie de bague peut être prévue. Par exemple, lors de l'usinage ou ébauche de la troisième partie de bague 34, un épaulement peut être prévu. Similairement, lors de l'usinage ou ébauche de la deuxième partie de bague 22 un épaulement peut être prévu. Ces deux épaulements peuvent être complémentaires et assurer un positionnement précis par complémentarité de forme des deuxième et troisième parties de bague 22, 34 l'une par rapport à l'autre.

On vient ensuite fixer la troisième partie de bague 34 sur la deuxième partie de bague 22 (et/ou sur la première partie de bague 21) par des organes de fixation 38, par exemple par des vis de fixation.

En l'espèce la première, la deuxième et la troisième partie de bague 21, 22, 34 sont maintenues solidaires les unes par rapport aux autres par des vis dont le nombre et le dimensionnement permettent de garantir la rigidité du roulement 10.

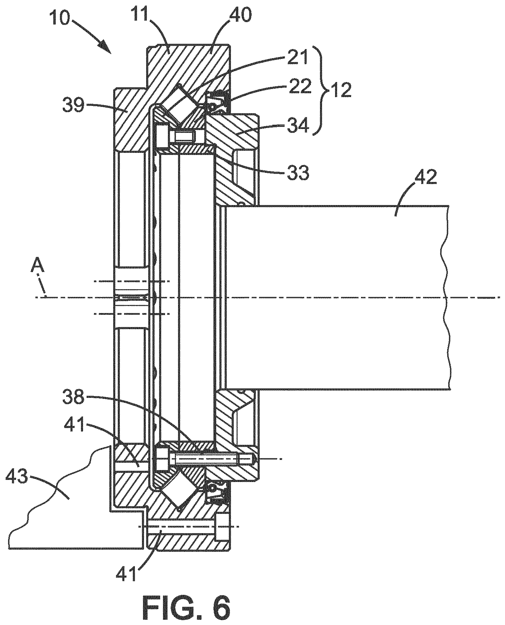

Tel que représenté sur la figure 6, le roulement 10 est destiné à faire parti d'un assemblage comportant notamment le premier organe 42.

La troisième partie de bague 34 forme une partie d'interface pour la fixation du premier organe 42. Aussi, par exemple, un arbre 42 peut être ajusté dans la troisième partie de bague 34. La troisième partie de bague étant non monobloc avec la première et/ou la deuxième partie de bague 21, 22, le matériau constituant la troisième partie de bague 34 peut être un matériau spécifique pour réaliser l'interface mécanique la plus adaptée au premier organe 42. Ainsi, le choix du matériau de la troisième partie de bague 34 est indépendant des choix de matériau des première et deuxième partie de bague 21, 22. Le choix du matériau de la troisième partie de bague 34 est réalisé entièrement en fonction du premier organe 42 sans diminuer les performances du roulement 10.

La bague extérieure 11 peut comporter des orifices de fixation, par exemple des trous taraudés débouchant 41, répartis régulièrement et destinés à sa fixation avec un deuxième organe 43. Par exemple la bague extérieure 11 peut comporter une collerette 39 annulaire rapportée sur son corps principal 40 de bague extérieure 11. La collerette 39 peut s'étendre vers l'axe central C-C et peut notamment venir en regard des orifices de fixation des première, deuxième et troisième parties de bague 21, 22, 34. Cette collerette annulaire 39 s'étend radialement vers l'axe central C-C de la bague extérieure 11. Les trous taraudés ou trous de fixation peuvent être localisés sur la collerette annulaire 39 et/ou sur le corps principal 40 de la bague extérieure 11.

En l'espèce, la collerette 39, lorsque le roulement 10 est assemblé, vient recouvrir la face radiale extérieure 30 de la première partie de bague 21, dans laquelle les orifices de fixation et/ou organes de fixation 25, 27, 38 sont visibles. Cette collerette permet de rendre quasi-invisible à un utilisateur recevant le roulement déjà monté la présence d'une bague intérieure en deux parties. Aussi, il n'y a pas de perte de qualité perçue par l'utilisateur final. Des orifices 44 axialement traversant son prévus dans la collerette pour pouvoir faire passer un outil de fixation des organes de fixation 25, 27, 38. Par exemple, les orifices 44 traversant permettent de faire passer un tournevis à travers la bague extérieure pour atteindre les organes de fixation 25, 27, 38 situés sur la bague intérieure et pour venir fixer des vis destinées à maintenir entre elles les première, deuxième et/ou troisième parties de bague 21, 22, 34.

En outre, un tel roulement 10 assure une dissociation des fonctions « roulement 10 » et « interface mécanique » et proposant des pièces séparées dédiées de la bague intérieure pour chacune des fonctions. Aussi, la fonction « roulement 10 » va être assurée par les première et deuxième partie de bague 22, et la fonction « interface mécanique » va être réalisée par la troisième partie de bague 34.

Un tel roulement 10 permet en outre un remplissage aisé des corps roulant. Il permet une fixation au travers de la bague extérieure. Un centrage peut être réalisé directement sur les corps roulants 20.

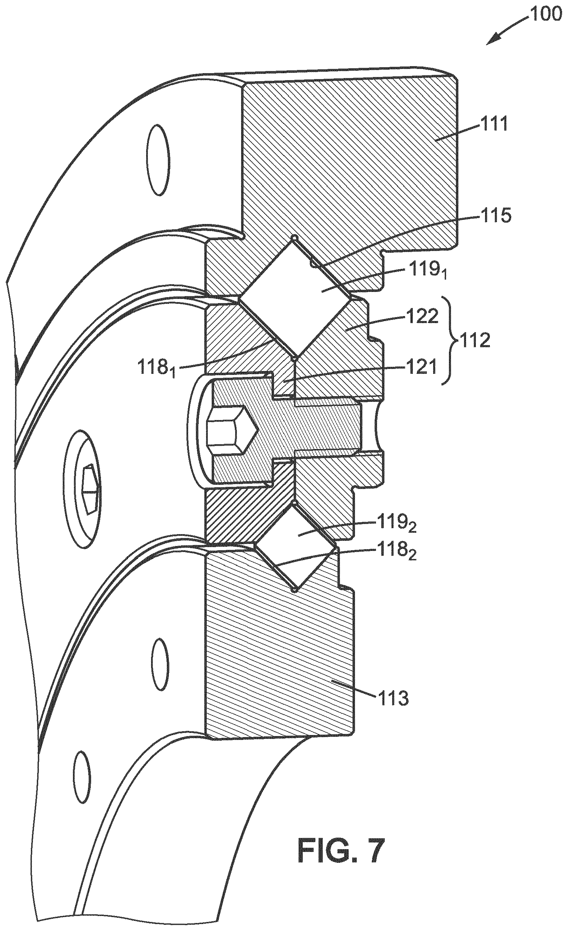

Dans un deuxième mode de réalisation, le roulement peut comporter trois bagues. Tel que représenté sur la figure 7, le roulement 100 comporte une bague extérieure 111 (ou première bague 111), une deuxième bague 112 qui est localisée à l'intérieure de la bague extérieure 111, et une troisième bague 113, elle-même localisée à l'intérieure de la deuxième bague 112.

Par exemple, la bague extérieure 111 peut être similaire à la bague extérieure 11 décrite en référence aux figures 1 à 6. La deuxième bague 112 et/ou la troisième bague 113 peut être similaire à la bague intérieure décrite en référence aux figures 1 à 6.

En l'espèce, tel que représenté sur la figure 7, la bague extérieure 111 peut être similaire à la bague extérieure 11 décrite en référence aux figures 1 à 6 et la deuxième bague 112 peut être similaire à la bague intérieure décrite en référence aux figures 1 à 6.

En l'occurrence, le roulement 100 diffère du roulement 10 décrit ci-dessus en référence aux figures 1 à 6, en ce qu'il comporte une troisième bague 113. La troisième bague est placée à l'intérieure de la deuxième bague 112.

La bague extérieure 111 définit un premier chemin de roulement 115. Chacune des trois bagues 111, 112, 113 comporte un axe central, les axes centraux des bagues 111, 112, 113 étant parallèles entre eux. La première et la deuxième bague 111, 112 sont espacées radialement par un premier espace annulaire 118₁. La deuxième et la troisième bague sont espacées radialement par un deuxième espace annulaire 118₂.

Une première rangée de corps roulants 119₁ est agencée dans le premier espace annulaire 118₁ et couple en rotation ladite deuxième bague 112 et ladite première bague 111, Une deuxième rangée de corps roulants 119₂ est agencée dans le deuxième espace annulaire 118₂ et couple en rotation ladite deuxième bague 112 et ladite troisième bague 113.

La deuxième bague 112, qui n'est pas une bague extérieure, comporte une première partie de bague 121 et une deuxième partie de bague 122. Chacune des première et deuxième parties de bague 121, 122 s'étendent sur un secteur angulaire égal à 360° autour de l'axe central de la deuxième bague 112.

Les première et deuxième parties de bague sont, mobiles l'une par rapport à l'autre entre une configuration assemblée, dans laquelle les première et deuxième parties de bague 121, 122 forment ensemble un deuxième chemin de roulement 116 et un troisième chemin de roulement 117 continu, et une configuration ouverte, dans laquelle la première partie de bague et la deuxième partie de bague 121, 122 sont à distance l'une de l'autre.

Une partie du deuxième chemin de roulement 116 est prévue sur chacune des première et deuxième parties de bague 121, 122. Une partie du troisième chemin de roulement 117 est prévue sur chacune des première et deuxième parties de bague 121, 122.

Dans la configuration ouverte, le premier espace annulaire 118₁ et le deuxième espace annulaire 118₂ sont accessibles, et des corps roulants des première et deuxième rangées de corps roulants 119₁, 119₂ peuvent être introduits et/ou ôtés des premier et deuxième espaces annulaires 118₁, 118₂.

De façon similaire au roulement 10 décrit en référence aux figures 1 à 6, le roulement 100 peut également dans des variantes de réalisation (non représentées) comprendre une partie de deuxième et/ou troisième bague formant interface entre les éléments fonctionnels du roulement 100 et un organe, sur lequel le roulement est destiné à être assemblé.

Egalement de façon similaire au roulement 10 décrit en référence aux figures 1 à 6, le roulement 100 peut comprendre une bague extérieure 111 avec une collerette (non représentée sur la figure 7) venant recouvrir au moins en partie une des faces visible de la bague intermédiaire. Par exemple, la bague extérieure peut comprendre une collerette pour venir couvrir l'organe de fixation maintenant entre elles les première et deuxième parties de bague 121, 122.

En outre, un roulement peut comprendre plus de deux rangées de corps roulants et plus de trois bagues. Par exemple, un roulement peut comprendre une bague intérieure, une bague extérieure et une pluralité de bagues intermédiaires, toutes ou certaines des bagues situées à l'intérieur de la bague extérieure (en d'autres termes toutes ou certaines des bagues intermédiaires et intérieure), par exemple une bague sur deux comprenant une première et une deuxième partie de bague, mobiles l'une par rapport à l'autre. L'invention est définie uniquement par les revendications ci-jointes.

## Revendications

1. Roulement (10) comportant :
- une bague extérieure (11) définissant un premier chemin de roulement (15) continu,
- une bague intérieure (12), lesdites bagues intérieure et extérieure comportant chacune un axe central (C-C), les axes centraux (C-C) des bagues intérieure et extérieure (11, 12) étant parallèles entre eux, lesdites bagues intérieure et extérieure (11, 12) étant espacées radialement par un espace annulaire (18),
- une rangée de corps roulants (19) agencée dans l'espace annulaire (18) et couplant en rotation ladite bague intérieure (12) et ladite bague extérieure (11),
la bague intérieure (12) comprend une première partie de bague (21) et une deuxième partie de bague (22), mobiles l'une par rapport à l'autre entre
une configuration assemblée, dans laquelle les première et deuxième parties de bague (21, 22) forment ensemble un deuxième chemin de roulement (16) continu, et
une configuration ouverte, dans laquelle la première partie de bague et la deuxième partie de bague (21, 22) sont à distance l'une de l'autre, des corps roulants (20) de la rangée de corps roulants (19) pouvant alors être introduits et/ou ôtés de l'espace annulaire (18),
une partie du deuxième chemin de roulement (23, 24) étant prévue sur chacune des première et deuxième parties de bague (21, 22),
lesdits premier et deuxième chemins de roulement (15, 16) coopérant avec chacun des corps roulants (20) de la rangée de corps roulants (19), et
chacune des première et deuxième parties de bague (21, 22) de la bague intérieure (12) s'étendent sur un secteur angulaire égal à 360° autour de l'axe central de la bague intérieure (12),
**caractérisé en ce que** la bague intérieure (12) comporte en outre une troisième partie de bague (34), adaptée pour être solidarisée à un organe de sorte à former une pièce d'interface entre l'organe et l'ensemble constitué des première partie de bague, deuxième partie de bague et bague extérieure (11), la troisième partie de bague (34) étant mobile par rapport à la deuxième partie de bague (22) entre
une configuration assemblée, dans laquelle la troisième partie de bague (34) est fixée sur la deuxième partie de bague (22), et
une configuration ouverte, dans laquelle la troisième partie de bague (34) est à distance de la deuxième partie de bague (22),
et **en ce que** les première, deuxième et troisième parties de bague sont maintenues solidaires les unes par rapport aux autres par des organes de fixations (25, 38) coopérant avec des orifices de fixation prévus dans les première et deuxième et troisième parties de bague.

2. Roulement (10) selon la revendication 1, dans lequel la première et deuxième partie de bague (21, 22) sont réalisées dans un premier matériau, la troisième partie de bague (34) est réalisée dans un deuxième matériau, le deuxième matériau étant différent du premier matériau.

3. Roulement (10) selon la revendication 1 ou 2, dans lequel les première et deuxième parties de bague (21, 22) comportent un premier traitement thermique et/ou de surface, la troisième partie de bague (34) comporte un deuxième traitement thermique et/ou de surface, les premier et deuxième traitements thermiques et/ou de surface étant différents.

4. Roulement (10) selon l'une quelconque des revendications 1 à 3, dans lequel la deuxième partie de bague (22) comporte un premier épaulement et la troisième partie de bague (34) comporte un deuxième épaulement complémentaire du premier épaulement pour le positionnement par complémentarité de forme de la troisième partie de bague (34) par rapport aux première et deuxième parties de bague (21, 22).

5. Roulement (10) selon l'une quelconque des revendications 1 à 4, dans lequel la première partie de bague (21) a une face extérieure biseautée qui définit une première partie du deuxième chemin de roulement (23), une face axiale intérieure (28) orientée vers l'axe central (C-C) de la bague intérieure (12), une face radiale intérieure (29) et une face radiale extérieure (30), et dans lequel la bague extérieure (11) comporte un corps principal (40) et une collerette (39) annulaire s'étendant vers l'axe central (C-C) de la bague extérieure (11) et recouvrant au moins en partie la face radiale extérieure (30) de la première partie de bague (21).

6. Roulement (10) selon l'une quelconque des revendications précédentes, dans lequel les organes de fixations (25, 38) sont des vis.

7. Roulement (10) selon l'une quelconque des revendications précédentes, dans lequel la bague extérieure (11) comporte des orifices de fixation, notamment des trous taraudés débouchant (41).

8. Roulement (10) selon l'une quelconque des revendications précédentes, dans lequel les corps roulants (20) sont en contact les uns par rapport aux autres.

9. Roulement (10) selon l'une quelconque des revendications précédentes, dans lequel la rangée de corps roulants est une rangée de rouleaux coopérant chacun avec les premier et deuxième chemins de roulement (10) ménagés sur les première et deuxième bagues.

10. Ensemble de roulement (10) comprenant un roulement (10) selon l'une quelconque des revendications 1 à 9 et un premier organe, ladite troisième partie de bague (34) étant fixée à l'organe et lesdites première et deuxième parties de bagues étant à distance de l'organe.

11. Ensemble de roulement selon la revendication précédente, dans lequel la bague extérieure (11) comporte des trous taraudés débouchant, l'ensemble de roulement (10) comprenant en outre un deuxième organe, le deuxième organe étant assemblé sur la bague extérieure du roulement (10) par l'intermédiaire des trous taraudés débouchant.

12. Procédé de fabrication d'un roulement (10), notamment d'un roulement selon la revendication 1, comprenant les étapes suivantes :
- réaliser une bague extérieure (11) définissant un premier chemin de roulement (15) continu,
- ébaucher une bague intérieure (12) comprenant une première partie de bague (21) et une deuxième partie de bague (22), lesdites bagues intérieure et extérieure comportant chacune un axe central (C-C) et chacune des première et deuxième parties de bague (21, 22) de la bague intérieure (12) s'étendant sur un secteur angulaire égal à 360° autour de l'axe central de la bague intérieure (12),
- assembler la première partie de bague (21) et la deuxième partie de bague (22),
- maintenir en position la deuxième partie de bague (22) sur la première partie de bague (21),
- usiner un deuxième chemin de roulement (16) continu sur la première partie de bague (21) et la deuxième partie de bague (22) de la bague intérieure (12) maintenues en position, une partie du deuxième chemin de roulement (16) étant prévue sur chacune des première et deuxième parties de bague (21, 22),
- traiter thermiquement le deuxième chemin de roulement (16),
- rectifier le deuxième chemin de roulement (16),
- placer la première partie de bague (21) et la deuxième partie de bague (22) en configuration ouverte, dans laquelle la première partie de bague et la deuxième partie de bague (21, 22) sont à distance l'une de l'autre, en désassemblant la deuxième partie de bague (22) de la première partie de bague (21) pour laisser accessible une partie du deuxième chemin de roulement (16),
- assembler la bague extérieure (11) et l'une des première ou deuxième partie de bague (21, 22), les axes centraux (C-C) des bagues intérieure et extérieure (11, 12) étant disposés parallèles entre eux, lesdites bagues intérieure et extérieure (11, 12) étant espacées radialement par un espace annulaire (18),
- remplir l'espace annulaire (18) formé entre la bague extérieure (11) et l'une des première ou deuxième partie de bague (21, 22) avec une rangée de corps roulants (19), lesdits premier et deuxième chemins de roulement (15, 16) coopérant avec chacun des corps roulants (20) de la rangée de corps roulants (19),
- replacer l'autre de la deuxième ou première partie de bague (22, 21) et fixer les deux parties de bague l'une par rapport à l'autre, et
comprenant en outre une étape de fourniture d'une troisième partie de bague (34), adaptée pour être solidarisée à un organe de sorte à former une pièce d'interface entre l'organe et l'ensemble constitué des première partie de bague, deuxième partie de bague et bague extérieure (11), une étape de fixation de la troisième partie de bague (34) sur la deuxième partie de bague (22), les première, deuxième et troisième parties de bague (21, 22, 34) formant la bague intérieure (12), et le maintien des première et deuxième et troisième parties de bague solidaires les unes par rapport aux autres par des organes de fixations (25, 38).

13. Procédé de fabrication d'un roulement (10) selon la revendication 12, dans lequel la deuxième partie de bague (22) est réalisée avec un premier épaulement et la troisième partie de bague (34) est réalisée avec un deuxième épaulement complémentaire du premier épaulement, et le procédé de montage comporte en outre une étape de positionnement par complémentarité de forme de la troisième partie de bague (34) par rapport aux première et deuxième parties de bague (21, 22).

## Patentansprüche

1. Wälzlager (10), umfassend:
- einen äußeren Ring (11), welcher einen kontinuierlichen ersten Rollweg (15) definiert,
- einen inneren Ring (12), wobei der innere und der äußere Ring jeweils eine Mittelachse (C-C) umfassen, wobei die Mittelachsen (C-C) des inneren und des äußeren Rings (11, 12) zueinander parallel sind, wobei der innere und der äußere Ring (11, 12) durch einen ringförmigen Raum (18) beabstandet sind,
- eine Reihe von Rollkörpern (19), welche in dem ringförmigen Raum (18) angeordnet sind und den inneren Ring (12) und den äußeren Ring (11) in Rotation koppeln,
wobei der innere Ring (12) einen ersten Ringabschnitt (21) und einen zweiten Ringabschnitt (22) umfasst, welche gegeneinander bewegbar sind zwischen einer zusammengefügten Konfiguration, in welcher der erste und der zweite Ringabschnitt (21, 22) zusammen einen zweiten kontinuierlichen Rollweg (16) bilden, und einer offenen Konfiguration, in welcher der erste Ringabschnitt und der zweite Ringabschnitt (21, 22) voneinander in einem Abstand sind, wobei die Rollkörper (20) der Reihe von Rollkörpern (19) somit in den ringförmigen Raum (18) eingegeben oder aus ihm entfernt werden können,
wobei ein Abschnitt des zweiten Rollwegs (23, 24) an jedem aus dem ersten und dem zweiten Ringabschnitt (21, 22) vorgesehen ist,
wobei der erste und der zweite Rollweg (15, 16) mit jedem der Rollkörper (20) der Reihe von Rollkörpern (19) zusammenwirken, und
wobei jeder aus dem ersten und dem zweiten Ringabschnitt (21, 22) des inneren Rings (12) sich über einen Winkelbereich erstreckt, welcher gleich 360° um die Mittelachse des inneren Rings (12) ist,
**dadurch gekennzeichnet, dass** der innere Ring (12) ferner einen dritten Ringabschnitt (34) umfasst, welcher dazu eingerichtet ist, an einem Element derart angebracht zu werden, dass ein Schnittstellen-Teil zwischen dem Element und der aus dem ersten Ringabschnitt, dem zweiten Ringabschnitt und dem äußeren Ring (11) gebildeten Baugruppe gebildet wird, wobei der dritte Ringabschnitt (34) gegenüber dem zweiten Ringabschnitt (22) bewegbar ist zwischen
einer zusammengefügten Konfiguration, in welcher der dritte Ringabschnitt (34) an dem zweiten Ringabschnitt (22) befestigt ist, und
einer offenen Konfiguration, in welcher der dritte Ringabschnitt (34) in einem Abstand von dem zweiten Ringabschnitt (22) ist,
und dadurch, dass der erste, zweite und dritte Ringabschnitt miteinander mittels Befestigungselementen (25, 38) verbunden sind, welche mit Befestigungsöffnungen zusammenwirken, welche in dem ersten und zweiten und dritten Ringabschnitt vorgesehen sind.

2. Wälzlager (10) nach Anspruch 1, wobei während der erste und der zweite Ringabschnitt (21, 22) aus einem ersten Material hergestellt sind, der dritte Ringabschnitt (34) aus einem zweiten Material hergestellt ist, wobei das zweite Material verschieden von dem ersten Material ist.

3. Wälzlager (10) nach Anspruch 1 oder 2, wobei während der erste und der zweite Ringabschnitt (21, 22) eine erste Wärme- und/oder Oberflächenbehandlung umfassen, der dritte Ringabschnitt (34) eine zweite Wärme- und/oder Oberflächenbehandlung umfasst, wobei die erste und die zweite Wärme- und/oder Oberflächenbehandlung unterschiedlich sind.

4. Wälzlager (10) nach einem der Ansprüche 1 bis 3, wobei der zweite Ringabschnitt (22) eine erste Schulter umfasst und der dritte Ringabschnitt (34) eine zweite Schulter umfasst, welche komplementär zu der ersten Schulter ist, für eine Positionierung durch die Komplementarität der Form des dritten Ringabschnitts (34) bezüglich des ersten und des zweiten Ringabschnitts (21, 22).

5. Wälzlager (10) nach einem der Ansprüche 1 bis 4, wobei der erste Ringabschnitt (21) eine angeschrägte äußere Fläche, welche einen ersten Abschnitt des zweiten Rollwegs (23) definiert, eine axial innere Fläche (28), welche in Richtung der Mittelachse (C-C) des inneren Rings (12) orientiert ist, eine radial innere Fläche (29) und eine radial äußere Fläche (30) aufweist, und wobei der äußere Ring (11) einen Hauptkörper (40) und einen ringförmigen Kragen (39) umfasst, welcher sich in Richtung der Mittelachse (C-C) des äußeren Rings (11) erstreckt und die radial äußere Fläche (30) des ersten Ringabschnitts (21) wenigstens teilweise bedeckt.

6. Wälzlager (10) nach einem der vorhergehenden Ansprüche, wobei die Befestigungselemente (25, 38) Schrauben sind.

7. Wälzlager (10) nach einem der vorhergehenden Ansprüche, wobei der äußere Ring (11) Befestigungslöcher umfasst, insbesondere Löcher mit Innengewinde (41).

8. Wälzlager (10) nach einem der vorhergehenden Ansprüche, wobei die Rollkörper (20) miteinander in Kontakt sind.

9. Wälzlager (10) nach einem der vorhergehenden Ansprüche, wobei die Reihe von Rollkörpern eine Reihe von Walzen ist, welche jeweils mit dem ersten und dem zweiten Rollweg (10) zusammenwirken, welche an dem ersten und dem zweiten Ring vorgesehen sind.

10. Wälzlager (10)-Anordnung, umfassend ein Wälzlager (10) nach einem der Ansprüche 1 bis 9 und ein erstes Element, wobei der dritte Ringabschnitt (34) an dem Element befestigt ist und der erste und der zweite Ringabschnitt von dem Element beabstandet sind.

11. Wälzlager-Anordnung nach dem vorhergehenden Anspruch, wobei der äußere Ring (11) Löcher mit Innengewinde umfasst, wobei die Wälzlager-Anordnung (10) ferner ein zweites Element umfasst, wobei das zweite Element an dem äußeren Ring des Wälzlagers (10) mittels Löchern mit Innengewinde angebracht ist.

12. Verfahren zum Herstellen eines Wälzlagers (10), insbesondere eines Wälzlagers nach Anspruch 1, umfassend die folgenden Schritte :
- Bereitstellen eines äußeren Rings (11), welcher einen ersten kontinuierlichen Rollweg (15) definiert,
- Bearbeiten eines inneren Rings (12), welcher einen ersten Ringabschnitt (21) und einen zweiten Ringabschnitt (22) umfasst, wobei der innere und der äußere Ring jeweils eine Mittelachse (C-C) umfassen und jeder aus dem ersten und dem zweiten Ringabschnitt (21, 22) des inneren Rings (12) sich über einen Winkelbereich erstreckt, welcher gleich 360° um die Mittelachse des inneren Rings (12) ist,
- Zusammenfügen des ersten Ringabschnitts (21) und des zweiten Ringabschnitts (22),
- Halten des zweiten Ringabschnitts (22) in Position an dem ersten Ringabschnitt (21),
- Arbeiten eines zweiten kontinuierlichen Rollwegs (16) an dem ersten Ringabschnitt (21) und dem zweiten Ringabschnitt (22) des inneren Rings (12), welche in Position gehalten werden, wobei ein Abschnitt des zweiten Rollwegs (16) an jedem aus dem ersten und dem zweiten Ringabschnitt (21, 22) vorgesehen ist,
- Wärmebehandeln des zweiten Rollwegs (16),
- Begradigen des zweiten Rollwegs (16),
- Versetzen des ersten Ringabschnitts (21) und des zweiten Ringabschnitts (22) in eine offene Konfiguration, wobei der erste Ringabschnitt und der zweite Ringabschnitt (21, 22) voneinander in einem Abstand sind, und Trennen des zweiten Ringabschnitts (22) von dem ersten Ringabschnitt (21), um einen Abschnitt des zweiten Rollwegs (16) zugänglich zu lassen,
- Montieren des äußeren Rings (11) und eines aus dem ersten oder zweiten Ringabschnitt (21, 22), wobei die Mittelachsen (C-C) des inneren und des äußeren Rings (11, 12) parallel zueinander angeordnet werden, wobei der innere und der äußere Ring (11, 12) radial durch einen ringförmigen Raum (18) beabstandet sind,
- Füllen des ringförmigen Raums (18), welcher zwischen dem äußeren Ring (11) und dem einen aus dem ersten oder zweiten Ringabschnitt (21, 22) gebildet ist, mit einer Reihe von Rollkörpern (19), wobei der erste und der zweite Rollweg (15, 16) mit jedem der Rollkörper (20) aus der Reihe von Rollkörpern (19) zusammenwirken,
- erneutes Setzen des anderen aus dem zweiten oder ersten Ringabschnitt (22, 21) und Befestigen der beiden Ringabschnitte bezüglich einander, und ferner umfassend einen Schritt eines Zuführens eines dritten Ringabschnitts (34), welcher dazu eingerichtet ist, mit einem Element derart verbunden zu werden, dass ein Schnittstellen-Teil zwischen dem Element und der aus dem ersten Ringabschnitt, dem zweiten Ringabschnitt und dem äußeren Ring (11) gebildeten Baugruppe gebildet wird, einen Schritt eines Befestigens des dritten Ringabschnitts (34) an dem zweiten Ringabschnitt (22), wobei der erste, der zweite und der dritte Ringabschnitt (21, 22, 34) den inneren Ring (12) bilden, und des Haltens des ersten und zweiten und dritten Ringabschnitts miteinander mittels Befestigungselementen (25, 38) verbunden.

13. Verfahren zum Herstellen eines Wälzlagers (10) nach Anspruch 12, wobei der zweite Ringabschnitt (22) mit einer ersten Schulter hergestellt ist und der dritte Ringabschnitt (34) mit einer zweiten Schulter hergestellt ist, welche komplementär zu der ersten Schulter ist, und wobei das Montageverfahren ferner einen Schritt einer Positionierung durch Komplementarität der Form des dritten Ringabschnitts (34) bezüglich dem ersten und zweiten Ringabschnitt (21, 22) umfasst.

## Claims

1. Bearing (10) comprising:
- an outer ring (11) defining a first continuous raceway (15),
- an inner ring (12), said outer and inner rings each having a central axis (C-C), the central axes (C-C) of the outer and inner rings (11, 12) being parallel with one another, said outer and inner rings (11, 12) being radially spaced apart by an annular space (18),
- a row of rolling bodies (19) disposed in the annular space (18) and coupling said inner ring (12) and said outer ring (11) in rotation,
the inner ring (12) comprises a first ring part (21) and a second ring part (22) displaceable relative to one another between
an assembled configuration in which the first and second ring parts (21, 22) together form a second continuous raceway (16), and
an open configuration in which the first ring part and the second ring part (21, 22) are at a distance from one another so that rolling bodies (20) of the row of rolling bodies (19) can then be introduced into and/or removed from the annular space (18),
a part of the second raceway (23, 24) being provided on each of the first and second ring parts (21, 22),
said first and second raceways (15, 16) co-operating with each of the rolling bodies (20) of the row of rolling bodies (19), and
each of the first and second ring parts (21, 22) of the inner ring (12) extending across an angular sector equal to 360° about the central axis of the inner ring (12),
**characterised in that** the inner ring (12) further comprises a third ring part (34) designed to be joined to a member so as to form an interface piece between the member and the assembly formed by the first ring part, second ring part and outer ring (11), the third ring part (34) being displaceable relative to the second ring part (22) between
an assembled configuration in which the third ring part (34) is secured to the second ring part (22), and
an open configuration in which the third ring part (34) is at a distance from the second ring part (22),
and **in that** the first, second and third ring parts are joined to one another by means of fixing members (25, 38) co-operating with fixing orifices provided in the first and second and third ring parts.

2. Bearing (10) as claimed in claim 1, wherein the first and second ring parts (21, 22) are made from a first material, the third ring part (34) is made from a second material, the second material being different from the first material.

3. Bearing (10) as claimed in claim 1 or 2, wherein the first and second ring parts (21, 22) are provided with a first thermal and/or surface treatment, the third ring part (34) is provided with a second thermal and/or surface treatment, the first and second thermal and/or surface treatments being different.

4. Bearing (10) as claimed in any one of claims 1 to 3, wherein the second ring part (22) comprises a first shoulder and the third ring part (34) comprises a second shoulder complementing the first shoulder for positioning the third ring part (34) relative to the first and second ring parts (21, 22) in a form-locking manner.

5. Bearing (10) as claimed in any one of claims 1 to 4, wherein the first ring part (21) has a bevelled external face which defines a first part of the second raceway (23), an internal axial face (28) directed towards the central axis (C-C) of the inner ring (12), an internal radial face (29) and an external radial face (30), and wherein the outer ring (11) comprises a main body (40) and an annular flange (39) extending towards the central axis (C-C) of the outer ring (11) and at least partially covering the external radial face (30) of the first ring part (21).

6. Bearing (10) as claimed in any one of the preceding claims, wherein the fixing members (25, 38) are screws.

7. Bearing (10) as claimed in any one of the preceding claims, wherein the outer ring (11) is provided with fixing orifices, in particular threaded through-holes (41).

8. Bearing (10) as claimed in any one of the preceding claims, wherein the rolling bodies (20) are in contact with one another.

9. Bearing (10) as claimed in any one of the preceding claims, wherein the row of rolling bodies is a row of roller bearings each co-operating with the first and second raceways (10) disposed on the first and second rings.

10. Bearing assembly (10) comprising a bearing (10) as claimed in any one of claims 1 to 9 and a first member, said third ring part (34) being secured to the member and said first and second ring parts being at a distance from the member.

11. Bearing assembly as claimed in the preceding claim, wherein the outer ring (11) is provided with threaded through-holes, the bearing assembly (10) further comprising a second member, the second member being assembled on the outer ring of the bearing (10) by means of the threaded through-holes.

12. Method for producing a bearing (10), in particular a bearing as claimed in claim 1, comprising the following steps:
- producing an outer ring (11) defining a first continuous raceway (15),
- forming an inner ring (12) comprising a first ring part (21) and a second ring part (22), said outer and inner rings each having a central axis (C-C) and each of the first and second ring parts (21, 22) of the inner ring (12) extending across an angular sector equal to 360° about the central axis of the inner ring (12),
- assembling the first ring part (21) and the second ring part (22),
- retaining the second ring part (22) in position on the first ring part (21),
- machining a second continuous raceway (16) on the first ring part (21) and the second ring part (22) of the inner ring (12), a part of the second raceway (16) being provided on each of the first and second ring parts (21, 22),
- subjecting the second raceway (16) to a thermal treatment,
- grinding the second raceway (16),
- placing the first ring part (21) and the second ring part (22) in the open configuration in which the first ring part and the second ring part (21, 22) are at a distance from one another by dismantling the second ring part (22) from the first ring part (21) in order to make a part of the second raceway (16) accessible,
- assembling the outer ring (11) and one of the first or second ring parts (21, 22), the central axes (C-C) of the outer and inner rings (11, 12) being disposed parallel with one another, said outer and inner rings (11, 12) being radially spaced by an annular space (18),
- filling the annular space (18) formed between the outer ring (11) and one of the first or second ring parts (21, 22) with a row of rolling bodies (19), said first and second raceways (15, 16) co-operating with each of the rolling bodies (20) of the row of rolling bodies (19),
- replacing the other of the second or first ring parts (22, 21) and securing the two ring parts to one another, and
further comprising a step of providing a third ring part (34) designed to be joined to a member so as to form an interface piece between the member and the assembly formed by the first ring part, second ring part and outer ring (11), and a step of securing the third ring part (34) to the second ring part (22), the first, second and third ring parts (21, 22, 34) forming the inner ring (12),
wherein first and second and third ring parts are joined to one another by fixing members (25, 38).

13. Method for producing a bearing (10) as claimed in claim 12, wherein the second ring part (22) is produced having a first shoulder and the third ring part (34) is produced having a second shoulder complementing the first shoulder, and the assembly process further comprises a step of positioning the third ring part (34) relative to the first and second ring parts (21, 22) in a form-locking manner.
